Europäisches Patentamt

European Patent Office

Office européen des brevets

(19)

(11) Veröffentlichungsnummer: **0 375 655**
**A2**

## (12) EUROPÄISCHE PATENTANMELDUNG

(21) Anmeldenummer: 90100460.6

(22) Anmeldetag: 13.02.87

(51) Int. Cl.5: **H01F 5/00, H01F 41/04**

Diese Anmeldung is am 10 - 01 - 1990 als Teilanmeldung zu der unter INID-Kode 60 erwähnten Anmeldung eingereicht worden.

(30) Priorität: 14.02.86 DE 3604579
26.08.86 DE 3628988

(43) Veröffentlichungstag der Anmeldung:
**27.06.90 Patentblatt 90/26**

(60) Veröffentlichungsnummer der früheren Anmeldung nach Art. 76 EPÜ: **0 258 344**

(84) Benannte Vertragsstaaten:
**AT BE CH DE FR GB IT LI LU NL SE**

(71) Anmelder: **Lungu, Cornelius**
**Rossbühlstrasse 11**
**D-7582 Bühlertal(DE)**

(72) Erfinder: **Lungu, Cornelius**
**Rossbühlstrasse 11**
**D-7582 Bühlertal(DE)**

(74) Vertreter: **Herrmann-Trentepohl, Werner,**
**Dipl.-Ing. et al**
**Herrmann-Trentepohl, Kirschner, Grosse,**
**Bockhorni & Partner Forstenrieder Allee 59**
**D-8000 München 71(DE)**

(54) **Wickeldraht und Verfahren zu seiner Herstellung.**

(57) Ein Wickeldraht für ein elektrisches Bauelement mit induktiven und kapazitiven Eigenschaften hat einen Kernleiter (1), eine diesen umgebende, als Dielektrikum ausgebildete Isolierschicht (2) und einen auf der Isolierschicht aufgebrachten Außenleiter (3). Als Kernleiter (1) ist ein dünner Draht vorgesehen. Die Isolierschicht (2) ist als dünne Schicht und der Außenleiter (3) als eine die Isolierschicht (2) mindestens teilweise umfassende dünne Metallisierungsschicht ausgebildet.

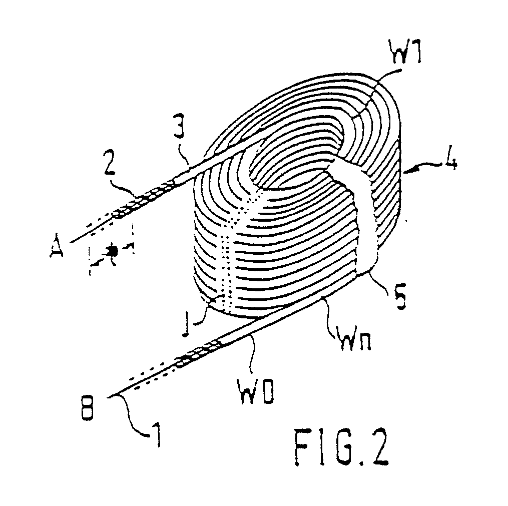

FIG.2

EP 0 375 655 A2

## Wickeldraht und Verfahren zu seiner Herstellung

Die Erfindung bezieht sich auf einen Wickeldraht für ein elektrisches Bauelement mit induktiven und/oder kapazitiven Eigenschaften sowie auf ein Verfahren zur Herstellung des Wickeldrahtes.

Aus der DE-OS 20 35 368 ist ein elektrisches Bauelement bekannt, bei dem zwei voneinander elektrisch isolierte Leiter spulenförmig in Windungen und Wicklungslagen aufgewickelt sind, wobei zwischen diesen Leitern ein Dielektrikum angeordnet ist. Die Leiter sind zwei dünne runde Wickeldrähte, die mit einer Isolierung, z.B. einer Lackschicht, überzogen und bifilar gewickelt sind. Die Isolierung dient als Dielektrikum. Zur Bildung eines magnetischen Feldes werden Ströme durch das Bauelement ausgenutzt, die kapazitiven Ursprungs sind, wobei die Kapazität zwischen den Drahtwindungen der Wicklung entsteht.

Aus der FR-PS 1 582 185 ist ein elektrisches Bauelement bekannt, bei dem ebenfalls eine bifilare Wicklung vorgesehen ist, die eine induktive und eine kapazitive Eigenschaft aufweist Eine Stromquelle ist an beiden Enden des ersten Leiters der bifilaren Wicklung Wicklung angeschlossen, während der parallel oder konzentrisch hierzu angeordnete zweite Leiter nicht angeschlossen ist.

Der Erfindung liegt die Aufgabe zugrunde, einen Wickeldraht für ein elektrisches Bauelement mit induktiven und/oder kapazitiven Eigenschaften anzugeben, der eine kleine Baugröße des Bauelements ermöglicht und dennoch erhebliche Mengen Energie kapazitiven Ursprungs speichern kann. Außerdem sollen Wege aufgezeigt werden, wie ein derartiger Wickeldraht hergestellt werden kann.

Gemäß der Erfindung wird die Aufgabe bei dem Wickeldraht durch die im Anspruch 1 oder 5 angegebenen Merkmale gelöst. Das erfindungsgemäße Verfahren zum Herstellen eines derartigen Wickeldrahtes ist im Anspruch 13 angegeben. Vorteilhafte Weiterbildungen des Wickeldrahtes und des Verfahrens zu seiner Herstellung ergeben sich aus den restlichen Ansprüchen.

Vorzugsweise wird ein runder Wickeldraht aus einem runden Kernleiter, einem diesen umgebenden Dielektrikum und einem das Dielektrikum umhüllenden Außenleiter verwendet. Das Dielektrikum kann durch Lackieren, Ummantelung, Umspinnen, Anodisieren oder durch elektrochemische Formierung hergestellt werden. Der Außenleiter ist vorzugsweise eine dünne, möglichst gleichmäßige Metallisierung, die mit Hilfe bekannter physikalischer oder chemischer Verfahren, wie Aufdampfen, Kathodenzerstäubung, chemische Abscheidung auf die dielektrische Schicht aufgebracht ist.

Der Wickeldraht ist in allen Richtungen gleichermaßen biegbar und bis zu sehr kleinen Abmessungen mit Durchmessern im Bereich von 0,01 Millimeter realisierbar. Für größere, insbesondere rotationssymmetrische Wicklungen kann man zur Erzielung größerer Füllfaktoren auch eine rechteckige Ausführungsform einsetzen.

Aus solchen Wickeldrähten können elektrische Bauelemente mit herkömmlichen Wickelverfahren hergestellt werden. Bei etwa gleichen Dimensionen können gegenüber den bekannten bifilar gewickelten elektrischen Bauelementen etwa um das 15- bis 20-fache höhere Kapazitätswerte erreicht werden. Lufträume zwischen den beiden Leitern treten nicht auf, sodaß Glimmentladungen unterbunden werden. Außerdem kann der Wickeldraht selbstheilend ausgebildet sein, so daß etwaige Durchschläge zwischen den Leitern keine Isolationsschäden hervorrufen.

Der Außenleiter, d.h. die Metallisierung dient allen Windungen des Kernleiters vorzugsweise als gemeinsame Kondensatorelektrode. Die Metallisierung jeder Windung ist hierzu elektrisch mit einer Sammelkontaktierung verbunden.

Das elektrische Bauelement gemäß der Erfindung kann auf vielfältige Weise angewendet werden und ersetzt eine Vielzahl von herkömmlichen Spule-Kondensator-Kombinationen. Mit dem elektrischen Bauelement können durch die Schaffung kapazitiver Eigenschaften innerhalb einer Induktivität Kondensatoren und Verbindungselemente zwischen Kondensatoren und Induktivitäten eingespart werden. Außerdem wird gegenüber herkömmlichen Bauelementen Material eingespart. Das Bauelement gemäß der Erfindung ist in hohem Maße miniaturisierbar. Darüber hinaus bringt der Einsatz solcher Bauelemente als Schwingkreis neue Eigenschaften, so z.B. die Frequenzanpassung bis zum Verhältnis 2:1 allein über eine Widerstandsänderung.

Weitere Ausgestaltungen der Erfindung gehen aus den Unteransprüchen hervor. Die Erfindung wird anhand der Zeichnung näher erläutert. In dieser stellen dar:

Figur 1 einen Querschnitt durch einen Wickeldraht für ein Bauelement gemäß der Erfindung;

Figur 2 eine perspektivische Ansicht eines spulenförmig gewickelten elektrischen Bauelementes gemäß der Erfindung;

Figur 3 eine perspektivische Ansicht eines Bauelementes gemäß der Erfindung zur Erläuterung des Wickelvorganges;

Figur 4 einen Querschnitt durch einen modifizierten Wickeldraht;

Figur 5 einen Querschnitt durch einen Teil eines elektrischen Bauelementes gemäß der Erfindung mit einer weiteren Ausführungsform des Wik-

keldrahtes;

Figuren 6a, b Ersatzschaltbilder eines Bauelementes gemäß der Erfindung;

Figuren 7a bis d eine schematische auseinandergezogene Darstellung einer Wicklung eines auch als Schwingkreis einzusetzenden Bauelementes gemäß der Erfindung sowie Diagramme zur Erläuterung der Wirkungsweise;

Figuren 8a bis c ein Ersatzschaltbild eines weiteren, als Schwingkreis eingesetzten Bauelementes mit Diagrammen zur Erläuterung der Wirkungsweise.

Ein Wickeldraht WD weist nach Figur 1 einen üblichen Runddraht aus z.B. Kupfer, Aluminium usw. als Kernleiter 1 auf, der eine gleichmäßige und lückenlose konzentrische Isolation 2 trägt. Diese Isolation ist möglichst dünn und kann einschichtig oder mehrschichtig, aus gleichen oder verschiedenartigen Lagen bestehen, um für eine gegebene dielektrische Festigkeit eine möglichst hohe relative dielektrische Konstante aufzuweisen. Für die Ausführung der Isolation kommen bekannte Verfahren wie Lackieren, Pulverlackieren, Umspinnen, Anodisieren usw. infrage.

Auf diese dielektrische Isolation 2 wird eine dünne, möglichst gleichmäßige Metallisierungsschicht als Außenleiter 3 aufgetragen. Der kapazitive Wickeldraht WD kann somit als beliebig langer dünner Drahtkondensator mit zwei konzentrischen Elektroden und einem dazwischenliegenden Dielektrikum bezeichnet werden. Die axiale elektrische Leitfähigkeit des Kernleiters 1 ist wesentlich höher als die Leitfähigkeit des Außenleiters bzw. der Metallisierung 3. Zweck dieser Ausgestaltung ist es, Kurzschluß-Windungswirkungen auf ein Mindestmaß zu reduzieren angesichts der Tatsache, daß infolge eines üblichen Wickelvorganges die sich berührenden Außenmetallisierungen 3 benachbarter Windungen und Wickellagen geschlossene Kurzschlußwindungen darstellen.

Nach Figur 2 besteht eine mit dem kapazitiven Wickeldraht WD gemäß Figur 1 ausgeführte Spule 3 aus einem zuammenhängenden Wickel mmehrerer (n) aneinanderliegender Windungen wi bis w n. Die Metallisierung 3 der sich berührenden Windungen bildet also einen geschlossenen Kreis, und an diesem wird eine elektrische Sammelkontaktierung 5 angebracht, die aus zwischen den Windungen eingelegten, dünnen Metallfolien besteht oder in Form eines aufgespritzten metallischen Streifens ausgeführt ist.

Eine einfache Art die Sammelkontaktierung 5 durchzuführen ist es, die Wände eines den Wickel umgebenden Spulentragkörpers in einer Weise mit Metall zu beschichten, die Kurzschlußströme verhindert und diese Beschichtung als elektrischen Anschluß zu benutzen.

Um insbesondere bei niedrigen Spannungen ausreichend hohe Längenkapazitätswerte zu erreichen, kann die Isolation 2 aus einer elektrochemisch erzeugten Formierschicht bestehen, wie bei Elektrolytkondensatoren üblich. In diesem Fall besteht der Kernleiter 1 aus Aluminium oder weist eine geschlossene Aluminiumschicht auf, die anodisiert werden kann. Statt der Metallisierung 3 wird der Kernleiter 1 samt Aluminiumoxidschicht 2 von einem mit flüssigem oder festem Elektrolyt getränkten Abstandshalter umgeben. Dessen elektrische Leitfähigkeit ist gering, so daß die Kurzschlußwindungswirkung schwach ist. Wenn der Kernleiter 1 als Anode fungiert, wird die elektrisch angeschlossene Kathode von zwischen den Windungen (Lagen) des vom Abstandshalter 3 umgebenen, isolierten Kernleiters 1 und eingelegten Alulminumstreifen gebildet, die der Sammelkontaktierung 5 in der Funktion ähnlich sind. Bei Wicklungen mit flüssigem Elektrolyt (ähnlich üblichen Elektrolytkondensatoren) kann der Abstandshalter 3 z.B. aus einer Umspinnung aus Baumwolle oder saugfähigem Papier bestehen, die erst nach dem Wickeln der Spule mit Elektrolyt getränkt wird. Die als Sammelkontaktierung 5 z.B. benutzten Aluminiumstreifen können in direktem Kontakt zum Spulentragkörper stehen, der z.B. ebenfalls aus Aluminium gefertigt ist. Es besteht die prinzipielle Möglichkeit, auch temperaturbeständigere Wicklungen dieser Art mit festem Elektrolyten in der Art trockener Elektrolytkondensatoren zu bauen. Dabei wird ein aus Glasfasern bestehender Abstandshalter von Anfang an mit einem festen Elektrolyten z.B. $MnO_2$ versetzt. Die weiteren Fertigungsschritte der Spule ähneln denen eines trockenen Elektrolytkondensators. Der Einfachheit halber werden im Laufe der Beschreibung nur die Begriffe Isolation 2, Metallisierung 3 und Sammelkontaktierung 5 erwähnt, wobei man sinngemäß auch eine Durchführung mit diesen Elektrolytkondensatortechniken verstehen kann.

Eine Änderung des magnetischen Flusses $\phi$ der Spule 4 bewirkt, daß in den Kernleiterwindungen Spannungen $U_w = d\phi/dt$ induziert werden, die entsprechend der Windungszahl sich addieren, so daß zwischen Anfang A und Ende B des Kernleiters 1 eine Spannung $U = nU_w$ entsteht. Die gleiche Windungsspannung $U_w$ entsteht auch in der elektrisch zu einem Kreis geschlossenen Metallisierung 3 des Wickeldrahtes. Dies könnte zu nachteiligen Kurzschlußströmen führen.

Für praktische Zwecke bei Netzfrequenzen können diese Kurzschlußströme durch eine dünn aufgetragene Metallisierung 3 kleingehalten werden, so daß deren Wirkung zu vernachlässigen ist. Für höhere Frequenzen ist es zweckmäßig, die Metallisierung 3 gezielt auf einem beliebigen Querschnitt I der Spule 4 zu unterbrechen, wodurch die Kurzschlußwirkung aufgehoben wird. Hierzu wird z.B. die dünne Metallisierung 3 durch eine elektrische Entladung örtlich entfernt. Dieses "Ausbrennen" der Metallisierung 3 kann während des Wicklungsvorganges geschehen, wenn der Wickeldraht vor dem Aufspulen, siehe Figur 3, zwischen zwei ringförmigen Elektroden 6, 6' geführt ist. Diese Elektroden, die auch in der Form von Schleifbürsten oder Kontaktrollen ausgeführt werden können, sind ständig in Kontakt mit der Metallisierung 3 des kapazitiven Wickeldrahtes nach Figur 1.

Wird nun kurzzeitig am Anfang jeder Umdrehung der Welle 7 der Wickelmaschine an diese Elektroden eine geeignete Spannung gelegt, z.B. über einen von der Welle 7 gesteuerten Schalter 8, so führt diese zu der örtlichen Zerstörung der Metallisierung 3 durch Wärme bzw. durch Entladungseinwirkung. Wichtig ist dabei, die elektrische Entladung so zu steuern, daß die Isolation nicht beschädigt wird. Da diese metallisierungsfreien Abschnitte auf der Spule 4 sich in der gleichen Winkellage befinden, bewirken diese eine Unterbrchung des sonst geschlossenen Metallisierungsringes; dadurch werden Wirbelströme vermieden.

Mit ähnlichen elektrischen Entladungsverfahren ist es auch möglich, die Metallisierung des Wickeldrahtes auch am Anfang A bzw. am Ende B der Spule 4 nach Figur 2 auf einer bestimmten Länge 1 zu entfernen. Dadurch lassen sich Entladungen zwischen den abisolierten Spulenanschlüssen A und B (Figur 2) und der Metallisierung 3 vermeiden.

Eine andere Form eines kapazitiven Wickeldrahtes, die vorwiegend größeren Leiterquerschnitten vorbehalten bleibt ist in Figur 4 dargestellt. Ein Kernleiter 1 ist von einer lückenlosen Isolationsschicht 2 umgeben, die wiederum von einem Mantelleiter 9 umgeben ist. Aus fertigungstechnischen Gründen kann dieser Mantelleiter eine oder mehrere Längsspalten aufweisen. Der Mantelleiter 9 hat einen Stromdurchgangsquerschnitt, der gleich oder unterschiedlich ist gegenüber dem des Kernleiters 1. Eine äußere Isolationsschicht 10 umgibt den Mantelleiter 9 und verhindert, daß sich dieser über benachbarten Windungen kurzschließt. Die Leiter 1 bzw. 9 bestehen aus Metall, z.B. aus Aluminium oder Wichkupfer.

Die Eigenschaften der Isolation 2 ähneln denen eines Dielektrikums für einen Kondensator. Das Isolieren kann durch übliche Verfahren wie Lackieren, Ummanteln, Umspinnen usw. ausgeführt werden.

Eine besondere Variante in der Ausführung der Isolation 2, die besonders Anwendungen bei niedrigerer Spannung zugute kommt, ist die dem Elektrolyt-Kondensator ähnliche Ausführung. Dafür wird auf dem Kernleiter 1 bzw. dem Mantelleiter 9 oder auf beiden eine anodische Formierschicht aus

z.B. $Al_2O_3$ gebildet. Diese Leiter bestehen dann aus Aluminium oder weisen eine anodisierbare Aluminiumschicht auf, und zwischen diesen beiden Leitern wird ein mit flüsigem oder festem Elektrolyt gefüllter Abstandshalter angebracht, wie beim Elektrolytkondensator. Durch diese bekannten Verfahren wird eine erheblich größere Kapazität erreicht. An die Isolation 10 als Windungsisolation werden geringere elektrische, jedoch höhere mechanische Anforderungen gestellt. Sie muß verhindern, daß der dünne Mantelleiter 9 sich während des Wickelvorgangs verformt. Die Isolation 10 muß bei der Ausführungsform mit flüssigem Elektrolyten dessen Auslaufen verhindern. Diese Isolation 10 kann aus einer Lackschicht wie bei üblichen Wickeldrähten oder aus einer einfachen bzw. lackierten Umspinnung bestehen.

Ein Wickeldraht mit zwei unabhängig voneinander schaltbaren Kapazitäten entsteht durch die dünne Beschichtung (ähnlich wie unter Figur 1 beschrieben) des kapazitiven Wickeldrahtes nach Figur 4 mit einer Metallisierung 3', die den bisher beschriebenen Verbund konzentrisch umgibt. Zwischen dieser Metallisierung 3' (nur links der Symmetrieachse strichpunktiert gezeichnet) und dem Mantelleiter 9 entsteht eine zusätzlich nutzbare Kapazität.

In Figur 5 ist ein Teil einer Wicklung eines elektrischen Bauelements mit einem bandförmigen Wickeldraht WD dargestellt. Er besteht aus zwei nebeneinanderliegenden elektrisch leitenden Flachdrähten 11 und 11', die in einer isolierenden als Dielektrikum dienender Kunststoffmasse 12 eingebettet sind. Die Herstellung kann z.B. auf einfache Weise geschehen, wenn die zwei Leiter 11, 11' auf eine isolierende Folie geklebt und nachträglich von einer zweiten Isolierfolie abgedeckt werden. Auf einer Seite des so gebildeten Bandleiters ist eine dünne Metallisierung 3" aufgetragen. Wie aus der Kondensatortechnik bekannt, kann man Isolation und Metallisierung derart aufeinander abstimmen, daß Isolationsdurchschläge selbstheilend sind.

Innerhalb der Wicklung liegen die verschiedenen Lagen des bandförmigen Wickelleiters aufeinander, so daß die nichtmetallisierte Außenseite des Bandleiters der einen Lage mit der Metallisierung 3" der darauffolgenden Lage in Kontakt steht. Die gemeinsame Metallisierung 3" bildet auf deren jeweiligen Breite mit den Leitern 11 und 11' Längenkapazitäten $C_1$ und $C_r$, die miteinander in Reihe gekoppelt sind. Dadurch liegt die Metallisierung 3" als gemeinsame Elektrode zweier in Reihe geschalteter Kondensatoren auf einem mittleren Potential gegenüber den Potentialen der Flachdrähte 11 bzw. 11'.

Zwischen den einzelnen Wicklungslagen des Bandleiters WD bilden sich zusätzliche Kapazitäten aus. Die Längenkapazität der so gebildeten Wicklung zwischen den Leitern 11 und 11' beträgt bei gleicher Stärke der Isolation auf der metallisierten bzw. nichtmetallisierten Seite ca. das Doppelte der Kapazität des nicht gewickelten Bandleiters.

Zwischen den leitenden Flachdrähten 11 und 11' wird ein Abstand vorgesehen, der ein Mehrfaches der Flächenisolationsstärke beträgt. Auf diese Weise wird erreicht, daß Durchschläge zwischen den Leitern vermieden werden. Eventuelle Durchschläge erfolgen dann nur zwischen einem der Leiter 11 bzw. 11' und der Metallisierung 3", die zwar an der Durchschlagsstelle zerstört wird, ohne daß jedoch gravierende Konsequenzen für die Wicklung auftreten. So ist es möglich, ähnlich wie bei einem selbstheilenden Kondensator, höhere Volumenkapazitätswerte durch höhere Beanspruchung des Dielektrikums zu erreichen.

Um die Darstellung der elektrischen Vorgänge in einer kapazitiv speichernden Spule zu vereinfachen, kann gezeigt werden, daß die physikalisch-elektrischen Vorgänge, die sich in Wicklungen abspielen, grundsätzlich identisch sind, auch wenn die Wicklungen mit verschiedenen kapazitiven Wickeldrähten ausgeführt sind. Die Unterschiede, die dabei auftreten, sind lediglich schaltungstechnischer Art. Eine Umsetzung der später beschriebenen Schaltungen für andere kapazitive Wickeldrahtarten ist daher aufgrund fachmännischen Wissens möglich.

Um die Wirkungsweise kapazitiv speichernder Spulen mit verschiedenen Kapazitivwickeldrahtarten zu erläutern, werden die grundsätzlichen Vorgänge Aufladen (bzw. Einspeisen eines Wechselstromes), Entladen (bzw. Entnahme eines Wechselstromes) und Umpolen für die 2 grundsätzlichen Kapazitivwickeldrahtarten erläutert.

Figur 6a zeigt ausgestreckt eine Spule, die im Ursprungszustand wie die in Figur 2 aussieht, also mit dem metallisierten Wickeldraht nach Figur 1 gewickelt ist, wobei A der Anfang des Kernleiters 1 ist, B dessen Ende und 5 die allen gemeinsame Sammelkontaktierung 5 der Metallisierung 3.

Figur 6b zeigt eine Spule, die mit dem Wickeldraht nach Figur 4 oder 5 gewickelt ist, wo, verglichen mit Figur 6a, anstelle der Metallisierung 3 der Mantelleiter 9 bzw. der zweite Leiter (11' Figur 5) mit dem Anfang C bzw. dem Ende D vorhanden ist.

Nicht gezeichnet ist in Figur 6a,b der magnetische Kern der Spulen als Träger eines magnetischen Flusses.

Aufgeladen wird nach Figur 6a zwischen den Punkten A$^+$ und 5-, wobei der magnetisch wirksame Strom durch den Kernleiter 1 in Richtung AB fließt. Im Falle einer Entladung zwischen A$^+$ und 5$^-$ fließt der Strom in umgekehrter Richtung von B nach A. Ein Umschaltkontakt 13 reicht für das Aufladen- Entladen. Ein Umpolen der magnetischen Vorgänge geschieht durch das Aufladen bzw. Entladen durch B$^+$ statt A$^+$, ohne die Polarität (-) der Sammelkontaktierung 5 zu ändern. Ein Umschaltkontakt 13' reicht daher für die Umpolung der Vorgänge.

Zwischen einer Aufladung bzw. Entladung über A und B besteht nicht nur bezüglich der Stromfließrichtung ein Unterschied. Der zeitliche Verlauf der Stromstärke ist auch unterschiedlich, weil die dem Kernleiterende B benachbarten Windungen infolge ihres größeren Umfanges mehr Energie ($\frac{nF}{m} \cdot m\, U^2$) speichern als die Anfangswindungen.

Nach Figur 6b muß ein magnetisch wirksamer Aufladevorgang zwischen den Punkten A$^+$ bzw. D$^-$ geschehen, damit durch den Kernleiter 1 bzw. Mantelleiter 9 der Strom in die gleiche Richtung (von A nach B bzw. C nach D) fließt. Man sieht, daß gegenüber Figur 6a der Strom durch eine doppelte Anzahl von Windungen fließt, so daß bei gleicher Stromstärkeverteilung ein doppelt so starkes Magnetfeld entsteht. Eine Entladung zwischen A und D über dem Umschalter 13" ruft gegenüber einer Aufladung entgegengesetzte Ströme (von B nach A bzw. D nach C) hervor, wodurch auch die magnetische Wirkung das andere Vorzeichen bekommt. Ein Umpolen des Aufladevorganges ist anders als unter Figur 6a möglich (ohne die Stromquelle umzupolen), wenn die Einspeisung über die Punkte B$^+$ bzw. C$^-$ erfolgt.

Dafür sind 2 Umschaltkontakte notwendig, und die magnetische Wirkung (vom Vorzeichen abgesehen) ist abweichend von dem Fall unter Figur 6a gleich wie bei der Einspeisung über A$^+$ bzw. D$^-$, wenn die Längenwiderstände des Kernleiters 1 und des Mantelleiters 9 gleich sind.

Wenn man diese schaltungstechnischen Gegebenheiten berücksichtigt, ist es also im Prinzip möglich, bei gleicher Kapazität und magnetisch effektiver Windungszahl kapazitiv speichernde Spulen mit dem Wickeldraht nach Figur 1 bzw. Figur 4 oder 5 zu bauen.

Bei gleichem Längenwiderstand des Kernleiters 1 bzw. des Mantelleiters 9 sind also statt 2n Windungen mit dem Wickeldraht nach Figur 1 nur n Windungen des Wickeldrahtes nach Figur 4 notwendig, wobei die Längenkapazität des letzteren doppelt so groß sein muß.

Der wickeldraht nach Figur 4 (linke Querschnittshälfte) mit dem Kernleiter 1, dem Mantelleiter 9 und der Metallisierung 3' kann als Kombination der beiden vorhin betrachteten Fälle angenommen werden. Der kapazitive Strom im Mantelleiter 9 ist die Summe der kapazitiven Ströme, die zwischen diesen und dem Kernleiter 1, bzw. der Metallisierung 3' entstehen. Es ist jederzeit möglich, den Kernleiter 1, den Mantelleiter 9 oder dessen Äquivalente 11, 11' nach Figur 5, zusätzlich zum kapazitiven Strom mit einem rein induktiven Strom wie in einer herkömmlichen induktiven Wicklung zu belasten. Nach bekannten Regeln muß in diesem Fall der jeweilige Leiterquerschnitt ggr. vergrößert werden.

Zur einfacheren Analyse der elektromagnetischen Eigenschaften einer Spule 4 nach Fig.2 wird diese in Fig. 7a mit losen Windungen dargestellt, bzw. in Fig. 7b symbolisch als Kondensator mit einer induktiv wirkenden Elektrode (Kernleiter 1). Zur Vereinfachung der Analyse werden die wichtigsten elektrischen Parameter als diskrete Größen jeweils in Bezug auf eine Windung betrachtet.

Nach Fig. 7 , mit Bezug auf Fig. 1 und 2, erkennt man den Kernleiter 1, der am Anfang A, bzw. am Ende B, von der Isolation 2 (strichpunktiert gezeichnet) befreit ist. Die Metallisierung 3 ist auf jeder Windung (in Scheitellage Fig. 7a), wie bereits beschrieben, unterbrochen, jedoch steht die Metallisierung jeder Windung in elektrischem Kontakt mit der Sammelkontaktierung 5. Jede einzelne Windung (W1 - Wn) kann also als Kondensator betrachtet werden, dessen Kapazität proportional zur jeweiligen Windungslänge ist und sich nach der Formel für konzentrische Leitungen berechnen läßt. Die Metallisierung 3 der einzelnen Windungen befindet sich über der Sammelkontaktierung 5 stets auf demselben Potential; die Potentiallage der einzelnen Windungen untereinander ist dagegen von der Änderung des magnetischen Flusses abhängig, der die Spule durchdringt.

Bei einer definierten Änderung des magnetischen Flusses entsteht zwischen Anfang A und Ende B des Kernleiters 1 ein Spannungsunterschied $U = \frac{d\phi}{dt}$, der sich gleichmäßig auf alle Windungen verteilt, sodaß die Windungsspannung $U_w = \frac{U}{n}$ beträgt (Fig. 7c).

Wenn die Spannung zwischen dem Kernleiter 1 und der Sammelkontaktierung 5 vor Beginn der Änderung des magnetischen Flusses $\phi$ gleich Null war, teilt sich die Spannung U gegenüber der Sammelkontaktierung 5 in eine negative Komponente am Kernleiteranfang A und in eine positive Komponente am Kernleiterende B. Dies ist auf die Windungskapazitäten zurückzu führen, die bei der Spannungsentstehung aufgeladen werden. Dieser Aufladung der einzelnen Windungskapazitäten liegen jeweils Aufladeströme zugrunde, die zwischen dem Kernleiter 1 und der Metallisierung 3 für den jeweiligen Windungsbereich fließen. Die Größe dieser Ströme ist also von der jeweiligen Windungskapazität $C_w$, bzw. vom Spannungspegel der jeweiligen Windung gegenüber der Sammelkontaktierung 5 abhängig. Im Bereich der positiven, bzw. der negativen Spannung, weisen diese Ströme entgegengesetzte Richtungen auf, und weil die Spule keine äußere Verbindung hat und kein Strom nach außen fließen kann, ist auch die Summe der positiven und negativen auf kapazitive Weise hervorgerufenen Ströme gleich null.

Weil die Sammelkontaktierung 5 eine gemeinsame Kondensatorelektrode darstellt, erfolgt der Ausgleich dieser Ströme über den Kernleiter 1, der im Bereich der Windung, deren Spannung gleich null ist, die maximale Strombelastung erreicht.

Der Verlauf der kapazitiven Ströme zwischen Kernleiter und Metallisierung der jeweiligen Windung ist in Figur 7d dargestellt, und die Strombelastung des Kernleiters 1 als Summe dieser Ströme ist in Figur 7e abgebildet. Diese Ströme wirken der Änderung der Spannung an den einzelnen Windungskapazitäten und dadurch einer Magnetflußänderung entgegen.

Gelangt die Magnetflußänderung zum Stillstand, so neigen jetzt die wie vorher beschrieben entstandenen positiven und negativen Ladungen der Windungskapazitäten $C_w$ sich gegenseitig über dem Kernleiter 1 zu neutralisieren.

Dies hat zur Folge, daß die in Figur 7 d und 7e dargestellten Ströme ihre Richtung umkehren, so daß durch den Kernleiter 1 jetzt ein Strom in entgegengesetzter Richtung fließt, der erneut ein Magnetfeld hervorruft.

Die wechselseitige Auf- Entladung der Windungskapazitäten einer sSpule nach Figur 2 in Zusammenhang mit der antagonistischen Änderung des Magnetflusses bewirkt ähnlich wie in einem herkömmlichen Schwingkreis eine elektromagnetische Schwingung, die durch Widerstands- und Ummagnetisierungsverluste gedämpft wird.

Diese Schwingung kann durch eine schnelle Änderung des magnetischen Flusses angeregt werden und hat, solange der Sättigungsbereich eines magnetischen Kernes der Spule 4 nicht erreicht ist, einen sinusförmigen Verlauf. Durch synchronisierte Energiezufuhr von außen in Form von elektrischer oder magnetischer Energie kann in bekannter Weise die Dämpfung dieser Schwingung kompensiert werden, wodurch wie in einem herkömmlichen Schwingkreis technisch nutzbare Schwingungen konstanter Amplitude aufrecht erhalten werden. Die Frequenz dieser Schwingung läßt sich durch aufwendigere Berechnungsverfahren anahand bekannter Formeln ermitteln, wenn jeder Windung ihre charakteristischen Größen (R - L - C) als diskrete Mengen zugrunde gelegt werden. Als Näherungsverfahren für die Praxis kann man die Frequenz eines herkömmlichen Schwingkreises in Betracht ziehen, der die gleiche Kernreluktanz und Wicklungsparameter aufweist, wobei man eine äußerliche Kapazität einsetzt, die etwa genau so groß ist wie die gesamte Kapazität zwischen Kernleiter 1 und Sammelkontaktierung 5. Die Eigenschwingfrequenz der induktiv-kapazitiven Spule 4 nach Figur 2 ist in diesem Fall etwa 3 mal höher als die Eigenschwingfrequenz des herkömmlichen Schwingkreises.

Eine einfache Möglichkeit, die Frequenz dieser Schwingung etwa um den Faktor 2 zu reduzieren, zeigt die Fig. 8 . Dabei wird die Sammelkontaktierung 5 der Wickeldrahtmetallisierung 3 mit dem Anfang A oder dem Ende B des Kernleiters 1 mit Hilfe eines Umschalters 13 verbunden. Dadurch verlagert sich die Maximalspannung U als Summe der Windungsspannungen $U_w$ insgesamt zwischen der Sammelkontaktierung 5 und dem freien Ende des Kernleiters 11, wodurch alle Windungskapazitäten $C_w$ mit einer Spannung gleichen Zeichens und insgesamt betrachtet auf einen höheren Spannungspegel aufgeladen werden. Dadurch ist die kapazitive Energiespeicherungsfähigkeit der Wicklung größer, was die Zeitkonstante des Schwingkreises verlängert. Die Fig.8b zeigt den Spannungsverlauf entlang des Kernleiters 1.

Ein solcher Schwingkreis kann nicht nur wie der vorher beschriebene durch eine Magnetflußänderung zum Schwingen angeregt werden, sondern auch durch die Aufladung und anschließende Entladung der Windungskapazitäten. Dafür wird nach Fig.8a der Kernleiteranfang A über dem Umschalter 13 am PLuspol einer Spannungsquelle angeschlossen. Schaltet man nach Aufladung der Wicklung nun den Kernleiteranfang A an die Sammelkontaktierung 5 (= Minuspol) an, so entladen sich die Windungskapazitäten über dem Kernleiter 1 und rufen einen Strom hervor, der seinen Maximalwert am Anfang A des Kernleiters 1 erreicht (Stromverlauf entlang dem Kernleiter 1, in Fig.8c dargestellt). Ähnlich wie im vorher beschriebenen Fall entsteht auch hier eine gedämpfte Schwingung, deren Frequenz etwa 1,5 mal höher liegt als die Frequenz eines herkömmlichen Schwingkreises mit gleichen Spulenparametern, bzw. gleicher Kapazität. Eine zwischen dem Kernleiter 1 und der Sammelkontaktierung 5 aufgebaute Spannung kann auch über das Ende B des Kernleiters 1 entladen werden. Es entsteht wie im vorliegenden Fall eine Schwingung, deren Frequenz bei technisch üblichen Spulenabmessungen etwas höher liegt als im vorherigen Fall.( Anschluß an A) Dies ist mit der umgekehrten Verteilung der Windungskapazitäten entlang der Entladungsstrecke über dem Kernleiter 1 zu erklären. Die Windungskapazitäten, die proportionell zu der Windungslänge sind, nehmen zwischen Kernleiteranfang A und Kernleiterende B zu. Gedämpfte Schwingungen treten auf nicht nur im Falle einer Entladung, sondern auch im Falle einer Aufladung über dem Anfang A oder über dem Ende B des Kernleiters 1. Die Schwingungen weisen gleiche Frequenzen wie im Falle einer Entladung auf. Voraussetzung dafür ist die Einschaltung an eine Stromquelle mit ausreichend niedriger Impedanz. Die beschriebenen Anordnungen sind in vielfacher und vorteilhafter Weise technisch nutzbar. Eine Spule 4 nach Fig.2, insbesondere mit magnetischem Kern, kann herkömmliche Schwingkreise ersetzen, ohne daß ein Kondensator notwendig ist.

Eine zusätzliche Eigenschaft der Schwingkreise, die wie beschrieben mit kapazitivem Wickeldraht hergestellt sind, ist die Tatsache, daß mit Hilfe eines variablen Widerstandes die Schwingfrequenz sich im Verhältnis 2:1 ändern läßt.

Regt man in einem Schwingkreis wie in Fig. 8 Resonanzschwingungen an und vergrößert den Widerstand zwischen Kernleiteranfang A und Sammelkontaktierung 5 von Q auf unendlich, so vergrößert sich die Schwingfrequenz auf 200 % der ursprünglichen. Die Schwingungsanregung, Energieeinspeisung für den Dämpfungsausgleich, bzw. die Abnahme eines Schwingsignals, kann sowohl über den Kernleiter 1 (als rein induktive Wicklung betrachtet) als auch in bekannter Weise über eine zusätzliche induktive Wicklung erfolgen.

Ein wichtiges Einsatzgebiet für kapazitiv speichernde Wicklungen wie in Fig. 2 ist die Magnettechnik. Hier wird die Aufladung - Entladung solcher Wicklungen in mechanische Arbeit umgesetzt. Es kann theoretisch wie praktisch nachgewiesen werden, daß bei gleichem Drahtdurchmesser, Isolationseigenschaften und Gesamtwindungszahl die Kapazität einer nach dem Stande der Technik bifilar gewickelten Spule 15 - 20 mal niedriger ist als die Kapazität der entsprechenden Spule nach Fig. 2. Dadurch ist die mit einer solchen Spule erreichbare mechanische Arbeit wesentlich größer, was den technischen Einsatz rechtfertigt.

## Ansprüche

1. Wickeldraht für ein elektrisches Bauelement mit induktiven und kapazitiven Eigenschaften, der einen Kernleiter, einen diesen umgebende, als Dielektrikum ausgebildete Isolierschicht und einen auf der Isolierschicht aufgebrachten Außenleiter aufweist, dadurch gekennzeichnet, daß als Kernleiter (1) ein dünner Draht vorgesehen ist, daß die Isolierschicht (2) als dünne Schicht ausgebildet ist und daß der außenleiter (3) als eine die Isolierschicht (2) mindestens teilweise umfassende dünne Metallisierungsschicht ausgebildet ist.

2. Wickeldraht nach Anspruch 1, dadurch gekennzeichnet, daß der Kernleiter (1) als dünner Draht mit rundem Querschnitt ausgebildet ist und daß die Isolierschicht (2) und der Außenleiter (3) konzentrisch um den dünnen Draht angeordnet sind.

3. Wickeldraht nach Anspruch 1 oder 2, dadurch gekennzeichnet daß auf dem Außenleiter (3) eine weitere Isolierschicht (10) angeordnet ist.

4. Wickeldraht nach Anspruch 3, dadurch gekennzeichnet, daß auf der weiteren Isolierschicht (10) ein diese mindestens teilweise umfassender